# EUROPÄISCHE PATENTSCHRIFT

(11) **EP 1 541 522 B1**
(45) Veröffentlichungstag und Bekanntmachung des Hinweises auf die Patenterteilung: **28.06.2006**
(21) Anmeldenummer: 04027939.0
(22) Anmeldetag: 25.11.2004
(51) Int. Cl.: B67C 3/10

(54) **Verfahren zum Befüllen von Behältern**
Method of operating a containers filling machine
Procédé de remplissage de conteneurs

(30) Priorität: 11.12.2003 DE 10357902
(43) Veröffentlichungstag der Anmeldung: 15.06.2005
(73) Patentinhaber: EADS Space Transportation GmbH, 28199 Bremen (DE)
(72) Erfinder: Kern, Peter Dr., 88682 Salem (DE)
(74) Vertreter: Meel, Thomas

(56) Entgegenhaltungen:
- EP-A- 1 262 446
- DE-A1- 10 220 695
- GB-A- 1 024 408
- GB-A- 2 218 079
- US-A1- 2002 014 276
- US-A1- 2002 023 689
- US-B1- 6 192 947

## Beschreibung

Die Erfindung betrifft ein Verfahren zum Befüllen eines Behälters in Schwerelosigkeit gemäß Patentanspruch 1 und ein Verfahren zur Herstellung einer monophasigen Lösung in Schwerelosigkeit gemäß Patentanspruch 2.

Für biowissenschaftliche, biologische oder chemische Experimente werden Behältnisse mit Lösungen befüllt oder es werden in den Behältnissen Lösungen durch Mischung verschiedener Komponenten hergestellt. Ein Erfordernis bei der Durchführung der Experimente ist, dass die Lösungen in Monophase (nur Flüssigphase) vorliegen. Dieses Erfordernis bereitet insbesondere bei der Durchführung der Experimente im Weltraum Probleme, da im Gegensatz zu den Bedingungen auf der Erde in der Schwerelosigkeit keine Phasentrennung von Flüssigkeit und Gas aufgrund von Dichteunterschieden stattfindet. Die Komponenten mehrphasiger Lösungen bleiben räumlich getrennt und in ihrer jeweiligen Anordnung stabil.

Derzeit werden zur Durchführung von Experimenten mit monophasigen Lösungen im Weltraum die monophasigen Lösungen vor dem Transport in den Weltraum blasenfrei in entsprechende Behälter abgefüllt. Für zukünftige Experimente auf der Internationalen Raumstation ISS besteht allerdings das Problem, dass die Haltbarkeitsdauer der Löslichkeit der Medien überschritten werden kann. Es entstehen offene Phasengrenzen zwischen Gas und Flüssigkeit, was die Lösung für den Einsatz in einem Experiment unbrauchbar macht.

Aus US 2002/023689 A1 ist ein Verfahren zur Befüllung von Behältern bekannt.

Aufgabe der Erfindung ist es, ein verbessertes Verfahren anzugeben, mit dem es möglich ist, unter Bedingungen der Schwerelosigkeit einen Behälter anwendungsnah blasenfrei mit einer Lösung zu befüllen. Eine weitere Aufgabe besteht in der Angabe eines verbesserten Verfahrens zur Herstellung einer blasenfreien monophasigen Lösung eines Feststoffs oder Flüssigkeit in einem Behälter in Schwerelosigkeit.

Diese Aufgaben werden mit den Verfahren gemäß Patentanspruch 1 und 2 gelöst. Vorteilhafte Ausführungen der Erfindung sind Gegenstand von Unteransprüchen.

Gemäß der Erfindung wird der Behälter in einem ersten Schritt mit einem Gas und in einem zweiten Schritt mit einer das Gas vollständig lösenden Flüssigkeit befüllt, wobei die Flüssigkeit eine ein Bikarbonatsalz enthaltende biologische Pufferlösung ist. Dadurch wird im ersten Schritt ein in dem Behälter bereits vorhandenes gering lösliches Gas vollständig aus dem Behälter entfernt und durch das hoch lösliche Gas ersetzt. Dieses Gas wird von der anschließend im zweiten Schritt in den Behälter eingebrachten Flüssigkeit vollständig gelöst, so dass keine Blasen in dem Behälter zurückbleiben. Ein Vorteil der Erfindung ist, dass der Behälter somit vollständig und blasenfrei befüllt werden kann.

Gemäß einem vorteilhaften Aspekt der Erfindung wird der mit einem Medium vorgefüllte Behälter in einem ersten Schritt mit einem Gas und in einem zweiten Schritt mit einer das Gas und das Medium vollständig lösenden Flüssigkeit befüllt. Dadurch wird gewährleistet, dass in dem Behälter eine monophasige Lösung vorliegt, in der das Gas und das Medium vollständig gelöst bzw. mit der Flüssigkeit durchmischt sind. Bei dem Medium kann es sich vorteilhaft um eine Paste, eine Flüssigkeit oder eine lösliche trockene oder gefriergetrocknete Substanz, z.B. ein Feststoff handeln.

Die Löslichkeit des Gases in der Flüssigkeit kann vorteilhaft durch das Verhältnis der von Gas- zu Flüssigkeitsvolumen vorgegeben werden. Es ist aber auch möglich, die Löslichkeit des Gases in der Flüssigkeit durch die Temperatur des Gases und/oder der Flüssigkeit vorzugeben. Dabei bewirkt eine tiefere Temperatur eine höhere Löslichkeit des Gases in der Flüssigkeit. In einer weiteren vorteilhaften Ausführung der Erfindung kann die Löslichkeit des Gases durch den Gas- und/oder Flüssigkeitsdruck vorgegeben werden.

Als Behälter können Behälter mit Hartschale, z.B. Flaschen oder faltbare Behälter eingesetzt werden.

Die Erfindung wird anhand eines Beispiels näher erläutert. Hierbei wird als Gas beispielsweise Kohlendioxid (CO₂) verwendet. Bei der Flüssigkeit handelt es sich zweckmäßig um eine Flüssigkeit auf Wasserbasis. Die Flüssigkeit enthält erfindungsgemäß beim Einsatz als biochemische Pufferlösung ein Bikarbonatsalz.

CO₂ besitzt eine hohe Löslichkeit in einer Flüssigkeit auf Wasserbasis. Bevor in einem ersten Schritt der leere oder mit einem Medium vorbefüllte Behälter mit der Flüssigkeit befüllt wird, wird der Behälter vollständig mit CO₂ gefüllt, um das sich in dem Behälter befindliche Gas durch CO₂ zu ersetzen. Unter dem Begriff leer ist hierbei zu verstehen, dass der Behälter frei ist von für einen Anwendungszweck vorgesehenes Medium. Der Behälter kann allerdings durchaus z.B. mit Luft, Flüssigkeit oder Feststoffen teilweise beladen sein. Diese Befüllung kann z.B. durch den Herstellungsprozess des Behälters oder der Lagerung des Behälters bedingt sein.

Im zweiten Schritt wird der Behälter mit der Flüssigkeit befüllt. Dabei kann durch die Flüssigkeitstemperatur die Löslichkeit des CO₂ beeinflusst werden. Je niedriger die Temperatur der Flüssigkeit bei vorgegebenem CO₂-Gasdruck in dem Behälter, umso größer ist die Gasvolumen, das in der Flüssigkeit gelöst werden kann. Dabei kann das gelöste Gasvolumen durchaus größer sein als das Flüssigkeitsvolumen, in welches das Gas gelöst wird. Bei hohen Temperaturen ist die Löslichkeit von CO₂ gering. Um das in dem Behälter enthaltene CO₂ vollständig in der Flüssigkeit zu lösen muss somit der Gasdruck oder das Gasvolumen reduziert werden.

## Patentansprüche

1. Verfahren zum Befüllen eines Behälters in Schwerelosigkeit, **dadurch gekennzeichnet, dass** der Behälter in einem ersten Schritt mit einem Gas und in einem zweiten Schritt mit einer das Gas vollständig lösenden Flüssigkeit befüllt wird wobei die Flüssigkeit eine ein Bikarbonatsalz enthaltende biologische Pufferlösung ist.

2. Verfahren gemäß Anspruch 1 zur Herstellung einer monophasigen Lösung in einem Behälter in Schwerelosigkeit, **dadurch gekennzeichnet, dass** der mit einem Medium vorgefüllte Behälter in einem ersten Schritt mit einem Gas und in einem zweiten Schritt mit einer das Gas und das Medium vollständig lösenden Flüssigkeit befüllt wird..

3. Verfahren nach Anspruch 2, **dadurch gekennzeichnet, dass** das Medium eine Flüssigkeit ist.

4. Verfahren nach Anspruch 2, **dadurch gekennzeichnet, dass** das Medium eine Paste ist.

5. Verfahren nach Anspruch 2, **dadurch gekennzeichnet, dass** das Medium eine lösliche trockene oder gefriergetrocknete Substanz ist.

6. Verfahren nach einem der vorangehenden Ansprüche, **dadurch gekennzeichnet, dass** die Löslichkeit des Gases in der Flüssigkeit durch das Verhältnis von Gas- zu Flüssigkeitsvolumen vorgebbar ist.

7. Verfahren nach einem der vorangehenden Ansprüche, **dadurch gekennzeichnet, dass** die Löslichkeit des Gases in der Flüssigkeit durch die Gas- und/oder Flüssigkeitstemperatur vorgebbar ist.

8. Verfahren nach einem der vorangehenden Ansprüche, **dadurch gekennzeichnet, dass** die Löslichkeit des Gases in der Flüssigkeit durch den Gas- und/oder Flüssigkeitsdruck vorgebbar ist.

9. Verfahren nach einem der vorangehenden Ansprüche, **dadurch gekennzeichnet, dass** die Behälter faltbar oder Behälter mit Hartschale sind.

10. Verfahren nach einem der vorangehenden Ansprüche, **dadurch gekennzeichnet, dass** das Gas Kohlendioxid oder ein anderes gut wasserlösliches Gas ist.

11. Verfahren nach einem der vorangehenden Ansprüche, **dadurch gekennzeichnet, dass** die Flüssigkeit eine Bikarbonatsalz enthaltene Flüssigkeit auf Wasserbasis ist.

## Claims

1. Method for filling a container under zero gravity conditions, **characterized in that** the container is filled in a first step with a gas and in a second step with a liquid which completely dissolves the gas, the liquid being a biological buffer solution containing a bicarbonate salt.

2. Method according to Claim 1 for producing a monophase solution in a container under zero gravity conditions, **characterized in that** the container which has been prefilled with a medium is filled in a first step with a gas and in a second step with a liquid which completely dissolves the gas and the medium.

3. Method according to Claim 2 **characterized in that** the medium is a liquid.

4. Method according Claim 2, **characterized in that** the medium is a paste.

5. Method according to Claim 2, **characterized in that** the medium is a soluble dry or freeze-dried substance.

6. Method according to one of the preceding claims, **characterized in that** the solubility of the gas in the liquid can be predetermined by the ratio of gas volume to liquid volume.

7. Method according to one of the preceding claims, **characterized in that** the solubility of the gas in the liquid can be predetermined by the gas and/or liquid temperature.

8. Method according to one of the preceding claims, **characterized in that** the solubility of the gas in the liquid can be predetermined by the gas and/or liquid pressure.

9. Method according to one of the preceding claims, **characterized in that** the containers are foldable or are containers with a hard shell.

10. Method according to one of the preceding claims, **characterized in that** the gas is carbon dioxide or another gas which is readily soluble in water.

11. Method according to one of the preceding claims, **characterized in that** the liquid is a water-based liquid containing bicarbonate salt.

## Revendications

1. Procédé de remplissage d'un récipient en apesanteur, **caractérisé en ce que** dans une première étape, le récipient est rempli d'un gaz et **en ce que** dans une deuxième étape, il est rempli d'un liquide qui dissout complètement le gaz, le liquide étant une solution tampon biologique qui contient un sel de bicarbonate.

2. Procédé selon la revendication 1, pour la préparation d'une solution monophasée dans un récipient en apesanteur, **caractérisé en ce que** dans une première étape, le récipient prérempli d'un fluide est rempli d'un gaz et **en ce que** dans une deuxième étape, il est rempli d'un liquide qui dissout complètement le gaz et le fluide.

3. Procédé selon la revendication 2, **caractérisé en ce que** le fluide est un liquide.

4. Procédé selon la revendication 2, **caractérisé en ce que** le fluide est une pâte.

5. Procédé selon la revendication 2, **caractérisé en ce que** le fluide est une substance soluble séchée ou lyophilisée.

6. Procédé selon l'une des revendications précédentes, **caractérisé en ce que** la solubilité du gaz dans le liquide peut être prédéterminée par le rapport entre le volume du gaz et le volume de liquide.

7. Procédé selon l'une des revendications précédentes, **caractérisé en ce que** la solubilité du gaz dans le liquide peut être prédéterminée par la température du gaz et/ou du liquide.

8. Procédé selon l'une des revendications précédentes, **caractérisé en ce que** la solubilité du gaz dans le liquide peut être prédéterminée par la pression du gaz et/ou du liquide.

9. Procédé selon l'une des revendications précédentes, **caractérisé en ce que** les récipients sont repliables ou sont des récipients à enceinte dure.

10. Procédé selon l'une des revendications précédentes, **caractérisé en ce que** le gaz est le dioxyde de carbone ou un autre gaz insoluble dans l'eau.

11. Procédé selon l'une des revendications précédentes, **caractérisé en ce que** le liquide est un liquide à base d'eau qui contient un sel de bicarbonate.
